# FASCICULE DE BREVET EUROPEEN

(11) **EP 2 288 581 B1**
(45) Date de publication et mention de la délivrance du brevet: **20.11.2013**
(21) Numéro de dépôt: 09784201.7
(22) Date de dépôt: 10.06.2009
(51) Int. Cl.: C04B 24/26, C04B 24/16, C04B 24/24

(54) **ADJUVANT POUR LIANT HYDRAULIQUE**
HILFSSTOFF FÜR EIN HYDRAULISCHES BINDEMITTEL
ADJUVANT FOR A HYDRAULIC BINDER

(30) Priorité: 12.06.2008 FR 0803256
(43) Date de publication de la demande: 02.03.2011
(73) Titulaire: Lafarge Gypsum International, 75116 Paris (FR)
(72) Inventeur: MEUNIER, Laurent, F-38300 Bourgoin-Jallieu (FR); RINALDI, David, F-69003 Lyon (FR); YAHIAOUI, Hakimi, 69780 MIONS (FR); FAURE, Jean-Michel, F-69600 Oullins (FR)
(74) Mandataire: Berruet, Laure
(86) Numéro de dépôt international: PCT/FR2009/000687
(87) Numéro de publication internationale: WO 2010/004107

(56) Documents cités:
- EP-A- 0 011 581
- EP-A- 1 052 232
- EP-A- 1 209 133
- DE-A1- 10 127 060
- FR-A- 2 230 600

## Description

La présente invention a pour objet l'utilisation d'un adjuvant dans des liants hydrauliques, en particulier dans les enduits à base de plâtre ou à base de sulfate de calcium anhydre.

Les enduits actuels à base de plâtre contiennent généralement divers additifs ou adjuvants qui permettent de contrôler la prise de l'enduit et éventuellement la rhéologie de l'enduit. Notamment, il est intéressant pour les fabricants de proposer des enduits prêt à l'emploi sous forme de pâte liquide ou semi-liquide dont l'hydratation du sulfate de calcium est bloquée par des agents bloquants. L'avantage de ce genre d'enduit prêt à l'emploi est que l'utilisateur n'a pas besoin de procéder au mélange de l'eau et du plâtre (gâchage). Ce blocage permet à l'enduit de rester sous forme de pâte liquide ou semi-liquide et de ne pas durcir dans son emballage. Aussi l'utilisateur de l'enduit aura besoin de débloquer le plâtre pour permettre la reprise de l'hydratation par l'ajout d'un agent débloquant.

Il est connu d'utiliser des polymères acryliques pour bloquer les enduits à base de plâtre ou de sulfate de calcium anhydre.

Il est également connu, de part le document EP 1 209133, des polymères vinyliques comme agent fluidifiant des liants hydrauliques.

Or lorsque l'on souhaite améliorer les performances de blocage de ces polymères, la pratique habituelle consiste à augmenter la quantité de polymères.

Afin de répondre aux exigences des utilisateurs, il est devenu nécessaire de trouver un moyen plus performant pour bloquer les enduits à base de plâtre ou de sulfate de calcium anhydre, notamment pour des durées de blocage importantes (par exemple supérieures à un an).

Aussi le problème que se propose de résoudre l'invention est de fournir un nouvel adjuvant adapté pour augmenter la durée de blocage des compositions de liants hydrauliques.

De manière inattendue, les inventeurs ont mis en évidence qu'il est possible de modifier les bouts de chaînes de polymères acryliques pour obtenir un adjuvant pour liants hydrauliques utile en tant qu'agent bloquant l'hydratation du sulfate de calcium, ayant des performances de blocage améliorées.

Dans ce but la présente invention propose l'utilisation d'au moins un polymère ou un de ses sels comme adjuvant pour liants hydrauliques, ledit polymère étant de formule (I)

Z-P-Z'

dans lequel
Z est un bout de chaîne et représente un atome d'hydrogène, un groupement hypophosphite ou un groupement phosphonate ;
Z' est un bout de chaîne et représente un groupement hypophosphite ou phosphonate;
P représente un composé comprenant au moins un motif de formule (II) 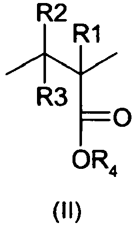 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire ;
et comprenant éventuellement au moins un motif de formule (III) 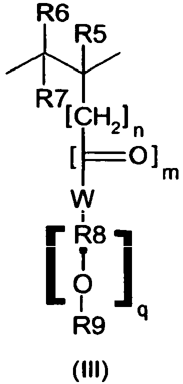 R5, R6, R7 représentent indépendamment un atome d'hydrogène, un radical alkyle linéaire ou ramifié en C₁ à C₂₀ ou un radical -(CH2)ₙ-(C=O)ₘ-W- (R8-O)_{q}-R9;
R8 représente un radical alkyle linéaire ou ramifié en C₂ à C₂₀;
R9 représente un atome d'hydrogène, ou un radical alkyle linéaire ou ramifié en C₁ à C₂₀;
W représente un atome d'oxygène ou d'azote ;
n est un nombre entier compris entre 0 et 2 ;
m est un nombre entier égal à 0 ou 1 ;
q est un nombre entier compris entre 0 et 200 ;
et dont le degré de polymérisation est compris entre 5 et 200
caractérisée en ce que l'on utilise ledit polymère ou l'un de ses sels en tant qu'agent bloquant l'hydratation du sulfate de calcium et éventuellement agent fluidifiant.

L'invention propose également un liant hydraulique comprenant au moins ledit polymère ou un de ses sels, ainsi que l'utilisation de ce liant hydraulique pour la réalisation d'un enduit de jointoiement.

Enfin, l'invention propose un enduit de jointoiement comprenant au moins ledit polymère ou un de ses sels.

L'invention offre des avantages déterminants, en particulier l'adjuvant selon la présente invention permet de bloquer l'hydratation du sulfate de calcium pendant au moins 6 mois, 12 mois, 18 mois, voire 24 mois, selon la quantité d'adjuvant utilisée.

Un autre avantage de la présente invention est que l'adjuvant selon l'invention a une meilleure efficacité de blocage pour un même dosage et à masse molaire identique, par rapport aux agents bloquants connus.

L'invention offre comme autre avantage que l'adjuvant selon l'invention peut être utilisé à des dosages inférieurs pour une même efficacité de blocage, par rapport aux agents bloquants connus de même masse molaire.

Selon une variante de la présente invention l'adjuvant permet, de part sa propriété fluidifiante, de formuler des enduits en utilisant des quantités d'eau réduites par rapport aux quantités classiquement utilisées.

D'autre part, selon une variante de la présente invention, l'adjuvant peut être utilisé comme agent bloquant et agent fluidifiant, ce qui évite le recours à 2 additifs différents pour obtenir le même résultat. L'adjuvant selon l'invention peut être qualifié de produit « 2 en 1 ».

De plus, selon une variante, l'adjuvant selon l'invention présente comme avantage de pouvoir être utilisé seulement en tant qu'agent fluidifiant.

Enfin l'invention a pour avantage de pouvoir être mise en oeuvre dans toutes industries, notamment l'industrie du bâtiment, l'industrie chimique (adjuvantiers) et appliquée à l'ensemble des marchés de la construction (bâtiment, génie civil ou usine de préfabrication), à l'industrie de la construction d'éléments en plâtre ou l'industrie cimentière.

D'autres avantages et caractéristiques de l'invention apparaîtront clairement à la lecture de la description et des exemples donnés à titre purement illustratifs et non limitatifs qui vont suivre.

Par l'expression liant, on entend selon la présente invention tout composé ayant la propriété d'apporter de la cohésion à la formulation dans laquelle il est incorporé, et qui permet d'apporter des caractéristiques mécaniques à ladite formulation (par exemple résistance en compression, en traction, adhérence). Ce liant est destiné à lier des éléments inertes tels que des granulats.

Par l'expression liant hydraulique, on entend selon la présente invention tout composé ayant la propriété de s'hydrater en présence d'eau et dont l'hydratation permet d'obtenir un solide ayant des caractéristiques mécaniques. L'expression liant hydraulique désigne également les liants hydriques.

Par l'expression enduit, on entend selon la présente invention une formulation semi-liquide qui, après mise en oeuvre, va acquérir des propriétés mécaniques. A titre d'exemple d'enduit, on peut citer les enduits de bouchage, de remplissage, de jointoiement, de lissage ou de finition.

Par l'expression adjuvant, on entend selon la présente invention tout composé qui, incorporé dans une formulation, permet d'apporter des propriétés particulières.

Par l'expression agent bloquant, on entend selon la présente invention tout adjuvant permettant d'empêcher la prise d'un liant hydraulique, pendant une durée d'au moins 6 mois, en particulier au moins 12 mois, en utilisant une quantité suffisante d'agent bloquant.

Par l'expression agent fluidifiant, on entend selon la présente invention tout adjuvant permettant de fluidifier.

Par l'expression agent de transfert, on entend selon la présente invention une molécule qui réagit avec un polymère en croissance pour en stopper la propagation, en générant une entité réactive capable de réamorcer une nouvelle polymérisation.

Par l'expression agent débloquant, on entend selon la présente invention tout adjuvant permettant de supprimer l'action bloquante de l'agent bloquant. A titre d'agent débloquant convenant selon l'invention, on peut citer les sels d'aluminium, de calcium, de zinc, de cuivre ou de fer, l'acide sulfurique, l'acide chlorhydrique, l'hydrogénosulfate de sodium, l'hydrogénosulfate de potassium, le sulfate d'aluminium potassium, et leurs mélanges. L'agent débloquant peut être utilisé sous forme de poudre, de liquide ou de bande imprégnée.

Par l'expression prise, on entend selon la présente invention le passage à l'état solide par réaction chimique.

Par l'expression degré de polymérisation (DPn), on entend selon la présente invention le dégré de polymérisation tel que défini dans le ***"Compendium of Chemical Terminology** »* publié par The International Union of Pure and Applied Chemistry (IUPAC). Le degré de polymérisation est le nombre moyen de motifs monomères par chaîne polymère tel que calculé par la formule : DPn = Mn / M0 avec Mn étant la masse molaire moyenne en nombre du polymère et MO étant la masse molaire du motif monomère constitutive.

L'invention concerne l'utilisation d'au moins un polymère ou un de ses sels comme adjuvant pour liants hydrauliques, ledit polymère étant de formule (I)

Z-P-Z' (I)

dans lequel
Z est un bout de chaîne et représente un atome d'hydrogène, un groupement hypophosphite ou un groupement phosphonate ;
Z' est un bout de chaîne et représente un groupement hypophosphite ou phosphonate;
P représente un composé comprenant au moins un motif de formule (II) 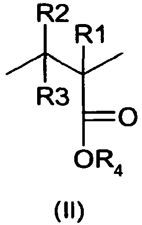 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆;
R4 représente un atome d'hydrogène, un ion monovalent divalent ou trivalent, ou un radical ammonium quaternaire ;
et comprenant éventuellement au moins un motif de formule (III) 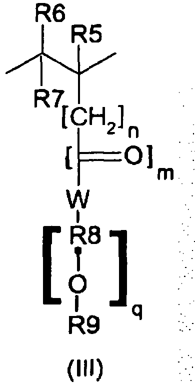 R5, R6, R7 représentent indépendamment un atome d'hydrogène, un radical alkyle linéaire ou ramifié en C₁ à C₂₀ ou un radical -(CH2)ₙ-(C=O)ₘ-W- (R8-O)_{q}-R9;
R8 représente un radical alkyle linéaire ou ramifié en C₂ à C₂₀;
R9 représente un atome d'hydrogène, ou un radical alkyle linéaire ou ramifié en C₁ à C₂₀;
W représente un atome d'oxygène ou d'azote ;
n est un nombre entier compris entre 0 et 2 ;
m est un nombre entier égal à 0 ou 1 ;
q est un nombre entier compris entre 0 et 200 ;
et dont le degré de polymérisation est compris entre 5 et 200.
caractérisée en ce que l'on utilise ledit polymère ou l'un de ses sels en tant qu'agent bloquant l'hydratation du sulfate de calcium et éventuellement agent fluidifiant.

De préférence, le degré de polymérisation est compris entre 5 et 100, et encore plus préférentiellement entre 5 et 50.

De préférence, le polymère selon la présente invention ou l'un de ses sels est utilisé en tant qu'agent bloquant et éventuellement agent fluidifiant.

De préférence, le polymère selon la présente invention ou l'un de ses sels est utilisé pour les liants hydrauliques choisis parmi les plâtres, les ciments, les mortiers, les bétons ou les liants à base de sulfate de calcium anhydre.

En particulier, le polymère selon la présente invention ou l'un de ses sels est utilisé pour les plâtres à base de sulfate de calcium hemihydraté (α ou β).

De préférence, le polymère selon l'invention ou un de ses sels possède un radical Z représentant un atome d'hydrogène.

De préférence, le polymère selon l'invention ou un de ses sels possède un radical Z' représentant un groupement hypophosphite.

Selon une variante, le polymère selon l'invention ou un de ses sels possède un radical Z' représentant un groupement phosphonate.

De préférence, le polymère selon l'invention ou un de ses sels possède un radical R1 représentant un atome d'hydrogène.

De préférence, le polymère selon l'invention ou un de ses sels possède un radical R2 représentant un atome d'hydrogène.

De préférence, le polymère selon l'invention ou un de ses sels possède un radical R3 représentant un atome d'hydrogène.

De préférence, le polymère selon l'invention ou un de ses sels possède un radical R4 représentant un atome d'hydrogène.

De préférence, le polymère selon l'invention ou un de ses sels possède un radical R5 représentant un atome d'hydrogène.

De préférence, le polymère selon l'invention ou un de ses sels possède un radical R6 représentant un atome d'hydrogène.

De préférence, le polymère selon l'invention ou un de ses sels possède un radical R7 représentant un atome d'hydrogène.

De préférence, le polymère selon l'invention ou un de ses sels possède un atome W représentant un atome d'oxygène.

De préférence, le polymère selon l'invention ou un de ses sels possède un radical R8 représentant un radical alkyl en C₂.

De préférence, le polymère selon l'invention ou un de ses sels possède un radical R9 représentant un radical alkyl en C₁ ou un atome d'hydrogène.

De préférence, le polymère selon l'invention ou un de ses sels possède un nombre entier n compris entre 0 et 1.

De préférence, le polymère selon l'invention ou un de ses sels possède un nombre entier q compris entre 2 et 100, de préférence entre 2 et 50, avantageusement entre 4 et 25.

En particulier, le polymère selon l'invention ou un de ses sels peut être utilisé pour bloquer un liant hydraulique, notamment les enduits à base de plâtre.

De préférence, le polymère selon l'invention ou un de ses sels convient tout particulièrement pour bloquer et éventuellement pour maîtriser, après déblocage, la fluidité des enduits à base de plâtre préalablement bloqués.

Plus particulièrement, selon une variante, le polymère selon l'invention va permettre de formuler des enduits contenant moins d'eau et de maîtriser la fluidité dudit enduit après déblocage.

Le polymère selon l'invention ou ses sels peuvent présenter une structure chimique variée. En particulier, la répartition des motifs (II) et (III) au sein du polymère peut varier d'une molécule à une autre. Notamment le polymère selon l'invention peut présenter une structure à bloc, statistique, alternée ou à gradient.

Par structure à bloc, on entend selon l'invention une structure comprenant des blocs distincts de chacun des motifs monomères.

Par structure statistique, on entend selon l'invention une structure comprenant les motifs monomères répartis de manière statistique ou encore aléatoire dans la chaîne polymère.

Par structure alternée, on entend selon l'invention une structure où les motifs monomères sont alternés dans la chaîne polymère.

Par structure à gradient, on entend selon l'invention une structure où la concentration de chaque motif monomère varie de façon inversement proportionnelle l'une par rapport à l'autre.

De préférence, le polymère selon l'invention présentera une structure statistique.

De préférence, les proportions relatives des motifs (II) par rapport aux motifs (III) dans le polymère peuvent varier entre 1/99 et 100/0 en proportion d'unités de motifs.

De préférence la proportion relative des motifs (II) par rapport aux motifs (III) est comprise entre 70/30 et 100/0.

Plus préférentiellement, la proportion relative des motifs (II) par rapport aux motifs (III) est comprise entre 80/20 et 100/0.

Selon une variante de l'invention, la proportion relative des motifs (II) par rapport aux motifs (III) est comprise entre 80/20 et 99/1.

Selon une autre variante de l'invention, la proportion relative des motifs (II) par rapport aux motifs (III) est de 100/0.

Le polymère selon l'invention ou ses sels possèdent un degré de polymérisation compris entre 5 et 200, préférentiellement entre 5 et 100, et encore plus préférentiellement entre 5 et 50.

Le polymère selon l'invention ou ses sels possèdent une masse molaire comprise entre 350 et 50 000 daltons. Par exemple lorsque le polymère selon l'invention comrpend uniquement des motifs (II) la masse molaire est comprise entre 350 et 15 000, plus particulièrement entre 350 et 7 500 daltons, de préférence entre 350 et 3 750 daltons.

Le polymère selon l'invention peut se présenter sous forme de sels ou sous forme acide, en totalité ou en partie. Les sels ou les ions convenant selon l'invention peuvent être choisis parmi les bases ou mélanges de bases connues de l'homme de l'art, par exemple un hydroxyde de sodium, un hydroxyde de potassium, un hydroxyde de calcium ou une amine primaire, secondaire ou tertiaire, ou encore les métaux tels que décrits dans la classification périodique des éléments, en particulier les métaux alcalins ou les métaux alcalino-terreux. D'autres métaux, comme les métaux de transition peuvent convenir également.

Les polymères sont obtenus par (co)polymérisation, de préférence de type radicalaire, de monomères appropriés. La (co)polymérisation peut être conduite de manière conventionnelle pour l'homme du métier.

Le terme (co)polymérisation signifie selon la présente invention polymérisation ou copolymérisation.

De préférence, le polymère selon l'invention est réalisé à partir de monomères d'acide acrylique.

La concentration de polymère selon l'invention dans la formulation dépend de l'application visée. Le polymère selon l'invention peut être utilisé sous forme de solution liquide, par exemple une solution aqueuse, sous forme de dispersion, ou encore sous forme de poudre. De préférence le polymère selon l'invention ou un de ses sels sera utilisé à une concentration comprise entre 0,01 et 10 %, de préférence entre 0,1 et 5%, encore plus préférentiellement entre 0,2 et 2 % en poids sec de polymère par rapport au poids sec de liant hydraulique.

Enfin, le polymère formulé pourra être utilisé seul ou en association avec un ou plusieurs autres adjuvants tels qu'un accélérateur, retardateur, épaississant, agent rhéologique ou éventuellement un autre dispersant, afin d'ajuster les propriétés rhéologiques et de prise du matériau.

L'invention a également pour objet un liant hydraulique comprenant au moins un polymère ou un de ses sels selon l'invention, ledit polymère étant de formule (I)

Z-P-Z' (I)

dans lequel
Z est un bout de chaîne et représente un atome d'hydrogène, un groupement hypophosphite ou un groupement phosphonate ;
Z' est un bout de chaîne et représente un groupement hypophosphite ou phosphonate;
P représente un composé comprenant au moins un motif de formule (II) 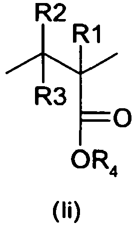 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire ;
et comprenant éventuellement au moins un motif de formule (III) 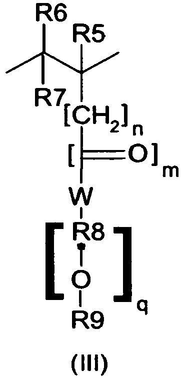 R5, R6, R7 représentent indépendamment un atome d'hydrogène, un radical alkyle linéaire ou ramifié en C₁ à C₂₀ ou un radical -(CH2)ₙ-(C=O)ₘ-W- (R8-O)_{q}-R9;
R8 représente un radical alkyle linéaire ou ramifié en C₂ à C₂₀ ;
R9 représente un atome d'hydrogène, ou un radical alkyle linéaire ou ramifié en C₁ à C₂₀;
W représente un atome d'oxygène ou d'azote ;
n est un nombre entier compris entre 0 et 2 ;
m est un nombre entier égal à 0 ou 1 ;
q est un nombre entier compris entre 0 et 200 ;
et dont le degré de polymérisation est compris entre 5 et 200.

Le polymère selon l'invention ou un de ses sels peut être incorporé dans le liant hydraulique sous forme de poudre, de solution liquide ou de dispersion.

Le liant hydraulique selon l'invention peut être utilisé pour la réalisation d'un enduit de jointoiement.

La concentration de polymère selon l'invention dans l'enduit dépend de l'application visée. De préférence le polymère selon l'invention ou un de ses sels sera utilisé à une concentration comprise entre 0,01 et 5 %, de préférence entre 0,02 et 2 %, avantageusement entre 0,02 et 1 % en poids de polymère par rapport au poids de l'enduit.

Le liant hydraulique selon la présente invention peut notamment être utilisé pour la réalisation d'un enduit de jointoiement.

L'invention a également pour autre objet un enduit de jointoiement comprenant au moins un polymère de formule (I) ou un de ses sels, ou obtenu à partir d'un liant hydraulique comprenant au moins un polymère de formule (I) ou un de ses sels

Z-P-Z' (I)

dans lequel
Z est un bout de chaîne et représente un atome d'hydrogène, un groupement hypophosphite ou un groupement phosphonate ;
Z' est un bout de chaîne et représente un groupement hypophosphite ou phosphonate ;
P représente un composé comprenant au moins un motif de formule (II) 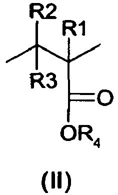 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire ;
et comprenant éventuellement au moins un motif de formule (III) 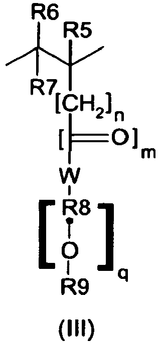 R5, R6, R7 représentent indépendamment un atome d'hydrogène, un radical alkyle linéaire ou ramifié en C₁ à C₂₀ ou un radical -(CH2)ₙ-(C=O)ₘ-W- (R8-O)_{q}-R9;
R8 représente un radical alkyle linéaire ou ramifié en C₂ à C₂₀;
R9 représente un atome d'hydrogène, ou un radical alkyle linéaire ou ramifié en C₁ à C₂₀ ;
W représente un atome d'oxygène ou d'azote ;
n est un nombre entier compris entre 0 et 2 ;
m est un nombre entier égal à 0 ou 1 ;
q est un nombre entier compris entre 0 et 200 ;
et dont le degré de polymérisation est compris entre 5 et 200, préférentiellement entre 5 et 100, et encore plus préférentiellement entre 5 et 50.

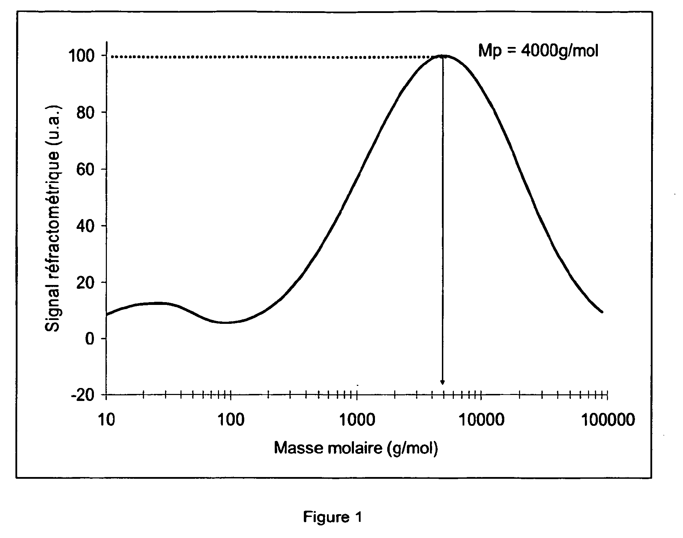

La figure 1 représente un exemple de chromatogramme (intensité du signal en fonction de la masse molaire), obtenu pour la détermination de la masse molaire au pic d'un polymère de masse Mp = 4000 g/mol.

Les exemples suivants illustrent l'invention sans en limiter la portée.

### EXEMPLES

### Conditions expérimentales pour la détermination des masses molaires.

Les polymères sont analysés par chromatographie d'exclusion stérique (SEC ou GPC). Les masses molaires sont déterminées comparativement à un étalonnage avec un polyacrylate de sodium (Polymer Laboratories). Les informations relatives à l'appareillage et aux conditions d'analyse sont reportées dans le tableau suivant :

| | | **GPC aqueuse** |
|---|---|---|
| Waters 515 HPLC Pump | | |
| Waters 517 plus Autosampler | | T° injection : ambiante |
| Waters 2410 Refractive Index Detector | | T° détecteur : 35°C |
| 3 Colonnes Aquagel en série : mixte, OH40 et OH30 | | T° colonnes : 35°C |
| Eluant | solution aqueuse ultra pure de NaNO₃ à 0,1N ; | |
| | NaH₂PO₄ 0.01 N | |
| | neutralisation à pH=7 avec NaOH | |
| | Débit 1mL/min | |

La chromatographie permet d'obtenir un chromatogramme du type de celui de la figure 1 (intensité du signal en fonction de la masse molaire). La masse molaire au pic (Mp) correspond à la masse molaire des espèces donnant le signal le plus intense.

### Exemple 1 : Synthèse d'un homopolymère d'acide acrylique à bout(s) de chaîne hypophosphite(s) - polymère 1

Dans un ballon tricol de 100mL, sont pesés respectivement les composés suivants :
- 10.1g d'acide acrylique
- 0.613g de sodium hypophosphite hydraté
- 30g d'eau déminéralisée.

Le ballon est alors adapté à un montage comprenant un réfrigérant, une canule d'azote et une sonde de température. L'agitation est assurée de façon magnétique. Un bain de chauffe est installé sous le ballon et la température est consignée à 80°C. Une fois la température de consigne atteinte et le dégazage suffisant du milieu réactionnel (15min), 0.41g d'acide 4,4-Azobis(4-cyanovalerique) sont ajoutés. Le milieu est maintenu pendant 2h à 80°C. Après refroidissement, on dispose d'une solution aqueuse limpide incolore du polymère en solution.

La masse molaire au pic du polymère obtenu est de 11600g/mol (Mp).

L'ensemble des manipulations est réalisé selon ce même mode opératoire.

Pour la synthèse de copolymères, le deuxième monomère peut être ajouté à l'initial lors de la pesée de l'acide acrylique. Une variante du procédé pourrait consister à ajouter le ou les monomères en une seule fois ou en plusieurs fois.

Selon le procédé, l'agent de transfert peut être ajouté à l'initial et/ou en une ou plusieurs fois. Selon les masses de polymères visées, la quantité d'agent de transfert est ajustée et/ou le procédé de synthèse est momifié : ajout des composés en continu et/ou discontinu, en une seule fois ou en plusieurs fois.

### Exemple 2 : Synthèse d'un homopolymère d'acide acrylique à bout(s) de chaîne hypophosphite(s) - polymère 2

Dans un ballon tricol de 100mL, sont pesés respectivement les composés suivants :
- 30g d'eau déminéralisée.
- 1.97g de sodium hypophosphite hydraté

Le ballon est alors adapté à un montage comprenant un réfrigérant, une canule d'azote et une sonde de température. L'agitation est assurée de façon magnétique. Un bain de chauffe est installé sous le ballon et la température est consignée à 80°C. Une fois la température de consigne atteinte et le dégazage suffisant du milieu réactionnel (15min), on procède à la coulée des 2 solutions suivantes sur 2h :
1- 20.20g d'acide acrylique dans 39.6g d'eau déminéralisée
2- 0.80g d'acide 4,4-Azobis(4-cyanovalerique), 20g d'eau déminéralisée et 0.30g : de NaOH en pastilles

Au terme des coulées, le milieu est maintenu pendant 1 h à 80°C. Après refroidissement, on dispose d'une solution aqueuse limpide incolore du polymère en solution.

La masse molaire au pic du polymère obtenu est de 1710 g/mol (Mp).

### Exemple 3 à 5 : Synthèse d'homopolymères d'acide acrylique à bout(s) de chaîne hydrophosphite(s)- polymères 3 à 5

L'ensemble des polymérisations présentées dans le tableau 1 est réalisé selon le mode opératoire de l'exemple 1. Le tableau 1 ci-dessous présente les conditions de préparation des polymères 3 à 5.

**Tableau 1**

| Exemple | Nature du polymère obtenu | Agent de transfert (AT) | % mol AT | Masse au pic (Mp) |
|---|---|---|---|---|
| polymère 3 (exemple comparatif) | polyacrylate à bout de chaîne Hypophosphite | HPNa | 2 | 45630 |
| polymère 4 | polyaciytate à bout de chaîne Hypophosphite | HPNa | 8 | 6964 |
| polymère 5 | polyacrylate à bout de chaîne Hypophosphite | HPNa | 10 | 6525 |

### Exemple 8 : Synthèse d'un copolymère à base d'acide acrylique et d'un macromonomère de formule (III) à bout(s) de chaîne hypophosphite(s) - polymère 6

Dans un ballon tricol de 100mL, sont pesés respectivement :
- 7.83g d'acide acrylique
- 2.82g d'AMPEG450
- 0.49g de sodium hypophosphite hydraté
- 40.0g d'eau déminéralisée.

Le ballon est alors adapté à un montage comprenant un réfrigérant, une canule d'azote et une sonde de température. L'agitation est assurée de façon magnétique. Un bain de chauffe est installé sous le ballon et la température est consignée à 80°C. Une fois la température de consigne atteinte et le dégazage suffisant du milieu réactionnel (15min), 0.474g d'acide 4,4-Azobis(4-cyanovalerique) sont ajoutés. Le milieu est maintenu pendant 2h à 80°C. Après refroidissement, on dispose d'une solution aqueuse limpide incolore du polymère en solution.

La masse molaire au pic du copolymère obtenu est de 45900g/mol (Mp). Le polymère renferme en moyenne 95%mol de motifs acide acrylique et 5%mol de motifs AMPEG450.

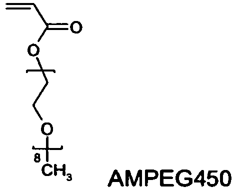

### Exemple 7 : Synthèse d'un copolymère à base d'acide acrylique et d'un macromonomère de formule (III) à bout(s) de chaîne hypophosphite(s) - polymère 7

Dans un ballon tricol de 100mL, sont pesés respectivement les composés suivants :
- 10g d'eau déminéralisée.
- 0.757g de sodium hypophosphite hydraté

Le ballon est alors adapté à un montage comprenant un réfrigérant, une canule d'azote et une sonde de température. L'agitation est assurée de façon magnétique. Un bain de chauffe est installé sous le ballon et la température est consignée à 80°C. Une fois la température de consigne atteinte et le dégazage suffisant du milieu réactionnel (15min), on procède à la coulée des 2 solutions suivantes sur 2h :
1- 7.70g d'acide acrylique et 2.80g d'AMPEG450 dans 20g d'eau déminéralisée
2- 0.48g d'acide 4,4-Azobis(4-cyanovalerique), 20g d'eau déminéralisée et 0.15g de NaOH en pastilles

Au terme des coulées, le milieu est maintenu pendant 1 h à 80°C. Après refroidissement, on dispose d'une solution aqueuse limpide incolore du polymère en solution.

La masse molaire au pic du polymère obtenu est de 4000 g/mol (Mp).

### Exemple 8 : Synthèse de copolymères à base d'acide acrylique et d'un macromonomère de formule (III) à bout(s) de chaîne contrôlé(s) - polymères 8

L'ensemble des polymérisations présentées dans le tableau 1 est réalisé selon le mode opératoire de l'exemple 6. Le tableau 2 ci-dessous présente les conditions de préparation du polymère 6

**Tableau 2**

| Exemple | Nature du polymère obtenu | Agent de transfert (AT) | % mol AT | Masse au pic (Mp) |
|---|---|---|---|---|
| polymère 6 | Poly(AA-co-AMPEG450) (95/5) à bout de chaîne Hypophosphile | HPNa | 8 | 34100 |

### Exemple 9 : Evaluation de l'effet bloquant des polymères 1 à 5 sur une pâte liquide de semi-hydrate de sulfate de calcium

L'effet bloquant des polymères 1 à 5 a été évalué sur une pâte liquide de semi-hydrate de sulfate de calcium (SH) gâchée à un ratio Eau / Poudre (E/P=0.60). Le temps de blocage a été évalué visuellement. Le plâtre est un plâtre β d'origine naturel SELECTA (Lafarge). Deux dosages différents ont été testés.

Le tableau 3 regroupe les résultats de temps de blocage obtenus avec les polymères 1 à 5.

**Tableau 3**

| | Durée de blocage (mois) | Durée de blocage (mois) |
|---|---|---|
| | Dosage = 0.1 % poids / SH | Dosage = 0.2 % poids / SH |
| polymère 1 | <0.1 | <0.1 |
| polymère 2 | 0.8 | 8.9 |
| polymère 3 (exemple comparatif) | <0.1 | <0.1 |
| polymère 4 | <0.1 | 4.9 |
| polymère 5 | <0.1 | 5.8 |

Pour un dosage de 0.1 % poids / SH, les valeurs de retard de prise inférieures à 0.1 mois obtenues pour les polymères 1, 3, 4 et 5 confirment que plus les polymères sont de grande taille, moins l'efficacité de retard est importante.

Pour un dosage de 0.2 % poids / SH, la tendance est confirmée et le polymère 2 propose la plus grande performance bloquante.

### Exemple 9 : Evaluation de l'effet bloquant des polymères 6 à 8 sur une pâte liquide de semi-hydrate de sulfate de calcium

L'effet bloquant des polymères 6 à 8 a été évalué sur une pâte liquide de semi-hydrate de sulfate de calcium (SH) gâchée à un ratio Eau / Poudre (E/P=0.60). Le temps de blocage a été évalué visuellement. Le plâtre est un plâtre β d'origine naturel SELECTA (Lafarge). Deux dosages différents ont été testés.

Le tableau 6 regroupe les résultats de temps de blocage obtenus avec les polymères 1 à 17.

**Tableau 6**

| | Durée de blocage (mois) | Durée de blocage (mois) |
|---|---|---|
| | Dosage = 0.2 % poids / SH | Dosage = 0.5 % poids / SH |
| polymère 6 | 0.1 | 5.5 |
| polymère 7 | 2.2 | > 8 |
| polymère 8 | 0.2 | 6.6 |

Comme pour les homopolymères, les copolymères ont un pouvoir bloquant d'autant plus fort que leur masse molaire est petite. La tendance a vérifiée à dosage faible (0.2% en poids / SH) comme à dosage élevé (0.5% en poids / SH).

## Revendications

1. Utilisation d'au moins un polymère ou un de ses sels comme adjuvant pour liants hydrauliques, ledit polymère étant de formule (I)
Z-P-Z' (I)
dans lequel
Z est un bout de chaîne et représente un atome d'hydrogène, un groupement hypophosphite ou un groupement phosphonate ;
Z' est un bout de chaîne et représente un groupement hypophosphite ou phosphonate;
P représente un composé comprenant au moins un motif de formule (II) 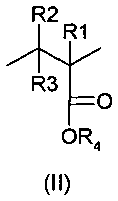 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire ;
et comprenant éventuellement au moins un motif de formule (III) 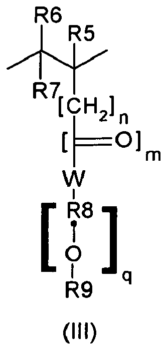 R5, R6, R7 représentent indépendamment un atome d'hydrogène, un radical alkyle linéaire ou ramifié en C₁ à C₂₀ ou un radical -(CH2)ₙ-(C=O)ₘ-W- (R8-O)_{q}-R9;
R8 représente un radical alkyle linéaire ou ramifié en C₂ à C₂₀ ;
R9 représente un atome d'hydrogène, ou un radical alkyle linéaire ou ramifié en C₁ à C₂₀ ; W représente un atome d'oxygène ou d'azote ;
n est un nombre entier compris entre 0 et 2 ;
m est un nombre entier égal à 0 ou 1 ;
q est un nombre entier compris entre 0 et 200 ;
et dont le degré de polymérisation est compris entre 5 et 200 ;
**caractérisée en ce que** l'on utilise ledit polymère ou l'un de ses sels en tant qu'agent bloquant l'hydratation du sulfate de calcium et éventuellement agent fluidifiant.

2. Utilisation selon la revendication 1, **caractérisée en ce que** l'on utilise ledit polymère ou l'un de ses sels pour les liants hydrauliques choisis parmi les plâtres, les ciments, les mortiers, les bétons ou les liants à base de sulfate de calcium anhydre.

3. Utilisation selon l'une quelconque des revendications 1 à 2, **caractérisée en ce que** l'on utilise ledit polymère ou l'un de ses sels pour les plâtres à base de sulfate de calcium hemihydraté (α ou β).

4. Utilisation selon l'une quelconque des revendications 1 à 3 **caractérisée en ce que** l'on utilise ledit polymère possédant un radical R1 représentant un atome d'hydrogène.

5. Utilisation selon l'une quelconque des revendications 1 à 4 **caractérisée en ce que** l'on utilise ledit polymère possédant un radical R2 représentant un atome d'hydrogène.

6. Utilisation selon l'une quelconque des revendications 1 à 5 **caractérisée en ce que** l'on utilise ledit polymère possédant un radical R3 représentant un atome d'hydrogène.

7. Utilisation selon l'une quelconque des revendications 1 à 6 **caractérisée en ce que** l'on utilise ledit polymère possédant un radical Z représentant un atome d'hydrogène.

8. Utilisation selon l'une quelconque des revendications 1 à 7 **caractérisée en ce que** l'on utilise ledit polymère possédant un radical Z' représentant un groupement hypophosphite.

9. Utilisation selon l'une quelconque des revendications 1 à 8 **caractérisée en ce que** l'on utilise ledit polymère possédant un radical Z' représentant un groupement phosphonate.

10. Utilisation selon l'une quelconque des revendications 1 à 9 **caractérisée en ce que** l'on utilise ledit polymère possédant une proportion relative des motifs (II) par rapport aux motifs (III) variant entre 1/99 et 100/0 en proportion d'unités de motifs.

11. Liant hydraulique comprenant au moins un polymère selon l'une quelconque des revendications 1 à 10.

12. Utilisation d'un liant hydraulique selon la revendication 11 pour la réalisation d'un enduit de jointoiement.

13. Enduit de jointoiement comprenant au moins un polymère selon l'une quelconque des revendications 1 à 10.

## Patentansprüche

1. Verwendung wenigstens eines Polymers oder eines seiner Salze als Adjuvans für hydraulische Bindemittel, wobei das Polymer die Formel (I) aufweist
Z-P-Z' (I)
in welcher
Z ein Kettenende ist und ein Wasserstoffatom, eine Hydrophosphitgruppe oder eine Phosphonatgruppe darstellt;
Z' ein Kettenende ist und eine Hydrophosphit- oder Phosphonatgruppe darstellt;
P eine Verbindung darstellt, die wenigstens ein Motif der Formel (II) umfasst 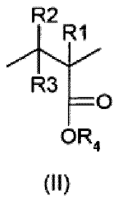 in welcher
R1, R2, R3 unabhängig voneinander ein Wasserstoffatom, ein lineares oder verzweigtes Alkylradikal von C₁ bis C₂₀ darstellen oder ein Radikal -(CH₂)ₚ-COOR oder eine ionisierte Form dessen, wobei p gleich 0 oder 1 ist und R ein Wasserstoffatom ist oder auch R ein Alkylradikal von C₁ bis C₆ ist;
R4 ein Wasserstoffatom, ein monovalentes, divalentes oder trivalentes Ion oder ein quaternäres Ammoniumradikal darstellt;
und gegebenenfalls wenigstens ein Motif der Formel (III) umfasst 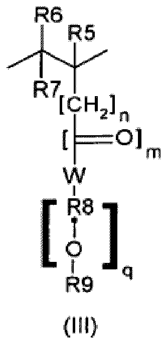 R5, R6, R7 stellen unabhängig voneinander ein Wasserstoffatom, ein lineares oder verzweigtes Alkylradikal von C₁ bis C₂₀ dar oder ein Radikal - (CH₂)ₙ-(C=O)ₘ-W-(R8-O)_{q}-R9;
R8 stellt ein lineares oder verzweigtes Alkylradikal von C₂ bis C₂₀ dar;
R9 stellt ein Wasserstoffatom oder ein lineares oder verzweigtes Alkylradikal von C₁ bis C₂₀ dar;
W stellt ein Sauerstoff- oder Stickstoffatom dar;
n ist eine ganze Zahl zwischen 0 und 2;
m ist eine ganze Zahl, die gleich 0 oder 1 ist;
q ist eine ganze Zahl zwischen 0 und 200;
und wobei der Polymerisationsgrad zwischen 5 und 200 liegt;
**dadurch gekennzeichnet, dass** das Polymer oder eines seiner Salze als Blockierungsmittel der Hydrierung von Calciumsulfat und gegebenenfalls als Verflüssigungsmittel verwendet wird.

2. Verwendung nach Anspruch 1, **dadurch gekennzeichnet, dass** das Polymer oder eines seiner Salze für hydraulische Bindemittel verwendet wird, ausgewählt aus Gips, Zement, Mörtel, Beton oder Bindemitteln auf Basis von wasserfreiem Calciumsulfat.

3. Verwendung nach einem der Ansprüche 1 oder 2, **dadurch gekennzeichnet, dass** das Polymer oder eines seiner Salze für Gips auf Basis von hemihydriertem Calciumsulfat (α oder β) verwendet wird.

4. Verwendung nach einem der Ansprüche 1 bis 3, **dadurch gekennzeichnet, dass** das Polymer verwendet wird, das ein Radikal R1 aufweist, welches ein Wasserstoffatom darstellt.

5. Verwendung nach einem der Ansprüche 1 bis 4, **dadurch gekennzeichnet, dass** das Polymer verwendet wird, das ein Radikal R2 aufweist, welches ein Wasserstoffatom darstellt.

6. Verwendung nach einem der Ansprüche 1 bis 5, **dadurch gekennzeichnet, dass** das Polymer verwendet wird, das ein Radikal R3 aufweist, welches ein Wasserstoffatom darstellt.

7. Verwendung nach einem der Ansprüche 1 bis 6, **dadurch gekennzeichnet, dass** das Polymer verwendet wird, das ein Radikal Z aufweist, welches ein Wasserstoffatom darstellt.

8. Verwendung nach einem der Ansprüche 1 bis 7, **dadurch gekennzeichnet, dass** das Polymer verwendet wird, das ein Radikal Z' aufweist, welches eine Hydrophosphitgruppe darstellt.

9. Verwendung nach einem der Ansprüche 1 bis 8, **dadurch gekennzeichnet, dass** das Polymer verwendet wird, das ein Radikal Z' aufweist, welches eine Phosphonatgruppe darstellt.

10. Verwendung nach einem der Ansprüche 1 bis 9, **dadurch gekennzeichnet, dass** das Polymer verwendet wird, das einen relativen Anteil der Motive (II) im Vergleich zu den Motiven (III) aufweist, der zwischen 1/99 und 100/0 in Anteilen der Motiveinheiten variiert.

11. Hydraulisches Bindemittel, das wenigstens ein Polymer nach einem der Ansprüche 1 bis 10 umfasst.

12. Verwendung eines hydraulischen Bindemittels nach Anspruch 11 zur Herstellung einer Spachtelmasse.

13. Spachtelmasse, die wenigstens ein Polymer nach einem der Ansprüche 1 bis 10 umfasst.

## Claims

1. Use of at least one polymer or one of the salts thereof as an adjuvant for hydraulic binders, said polymer having the formula (I)
Z-P-Z' (I)
wherein
Z is a terminal group and denotes a hydrogen atom, a hypophosphite group or a phosphonate group;
Z' is a terminal group and denotes a hypophosphite group or a phosphonate group;
P denotes a compound comprising at least one motif of formula (II) 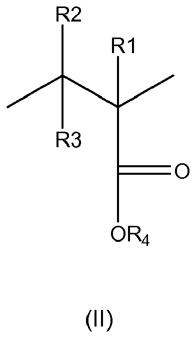 wherein
R1, R2, R3 independently denote a hydrogen atom, a linear or branched C₁ to C₂₀ alkyl group, or a -(CH₂)ₚ-COOR group or an ionised form thereof where p is equal to 0 or 1, and R is a hydrogen atom or R is a C₁ to C₆ alkyl group;
R4 denotes a hydrogen atom, a monovalent, divalent or trivalent ion, or a quaternary ammonium group;
and optionally comprising at least one motif of formula (III) 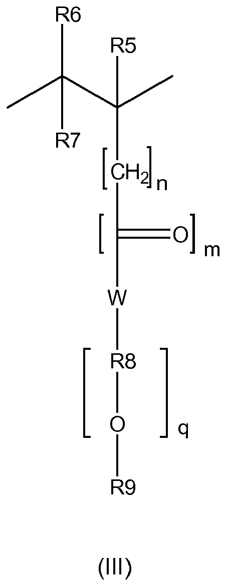 R5, R6, R7 independently denote a hydrogen atom, a linear or branched C₁ to C₂₀ alkyl group or a -(CH2)ₙ-(C=O)ₘ-W-(R8-O)_{q}-R9 group;
R8 denotes a linear or branched C₂ to C₂₀ alkyl group;
R9 denotes a hydrogen atom or a linear or branched C₁ to C₂₀ alkyl group;
W denotes an oxygen or nitrogen atom;
n is an integer from 0 to 2, inclusive;
m is an integer equal to 0 or 1;
q is an integer from 0 to 200, inclusive;
and wherein the degree of polymerisation is between 5 and 200;
**characterised in that** said polymer or one of the salts thereof is used as an agent blocking the hydration of calcium sulphate and optionally as a fluidifying agent.

2. Use according to claim 1, **characterised in that** said polymer or one of the salts thereof is used for hydraulic binders selected from among plasters, cements, mortars, concretes or binders based on anhydrous calcium sulphate.

3. Use according to either claim 1 or claim 2, **characterised in that** said polymer or one of the salts thereof is used for plasters based on calcium sulphate hemihydrate (α or β).

4. Use according to any one of claims 1 to 3, **characterised in that** said polymer having a group R1 denoting a hydrogen atom is used.

5. Use according to any one of claims 1 to 4, **characterised in that** said polymer having a group R2 denoting a hydrogen atom is used.

6. Use according to any one of claims 1 to 5, **characterised in that** said polymer having a group R3 denoting a hydrogen atom is used.

7. Use according to any one of claims 1 to 6, **characterised in that** said polymer having a group Z denoting a hydrogen atom is used.

8. Use according to any one of claims 1 to 7, **characterised in that** said polymer having a group Z' denoting a hypophosphite group is used.

9. Use according to any one of claims 1 to 8, **characterised in that** said polymer having a group Z' denoting a phosphonate group is used.

10. Use according to any one of claims 1 to 9, **characterised in that** said polymer having a relative proportion of motifs (II) to motifs (III) varying between 1/99 and 100/0 as a proportion of motif units is used.

11. Hydraulic binder comprising at least one polymer according to any one of claims 1 to 10.

12. Use of a hydraulic binder according to claim 11 for producing a pointing compound.

13. Pointing compound comprising at least one polymer according to any one of claims 1 to 10.
